# EUROPEAN PATENT SPECIFICATION

(11) **EP 1 295 413 B1**
(45) Date of publication and mention of the grant of the patent: **19.04.2006**
(21) Application number: 00936884.6
(22) Date of filing: 15.06.2000
(51) Int. Cl.: H04B 10/08, H04J 14/02, G01M 11/00

(54) **REFLECTOMETER WITH NON - RECIPROCAL OPTICAL COMPONENTS**
REFLEKTOMETER MIT NICHTREZIPROKEN OPTISCHEN BAUELEMENTE
REFLECTEUR A COMPOSANTS OPTIQUES NON RECIPROQUES

(43) Date of publication of application: 26.03.2003
(73) Proprietor: Agilent Technologies, Inc. (a Delaware corporation), Palo Alto, CA 94303 (US)
(72) Inventor: BELLER, Josef, D-71034 Boeblingen (DE)
(74) Representative: Barth, Daniel Mathias
(86) International application number: PCT/EP2000/005501
(87) International publication number: WO 2001/097413

(56) References cited:
- WO-A-00/20907
- FR-A- 2 687 030
- US-A- 6 061 484
- YOSHIAKI SATO ET AL: "OPTICAL TIME DOMAIN REFLECTOMETRY IN OPTICAL TRANSMISSION LINES CONTAINING IN-LINE ER-DOPED FIBER AMPLIFIERS" JOURNAL OF LIGHTWAVE TECHNOLOGY,IEEE. NEW YORK,US, vol. 10, no. 1, 1992, pages 78-83, XP000273023 ISSN: 0733-8724

## Description

The present invention relates to reflectometer measurements of optical components.

Optical reflectometer measurements are a standard test method for testing fiber optic cables in today's fiber optic network, and described in detail e.g. by the inventor in chapter 11 of the book 'Fiber Optic Test and Measurement' by Derickson Dennis, 1998, ISBN 0-13-534330.

In particular, during installation of optical fibers, the quality of a transmission link has to be tested and documented. The typical test equipment is an OTDR (Optical Time Domain Reflectometer) which receives and examines the return signal of a fiber under test that is stimulated by a probing pulse. This requires an optical path that is reciprocal, i.e. the backscatter signal that is generated by a signal which is launched into an optical fiber can find its way back to the OTDR in reverse direction.

With the advent of Wavelength Division Multiplexing (WDM) technology as a response to increasing bandwidth demand in the world of communications, new components were added to optical networks. Among these new components are optical circulators, which allow e.g. the realization of simple so-called Add-Drop Multiplexers. Circulators are non-reciprocal components, i.e. input and output ports cannot be exchanged.

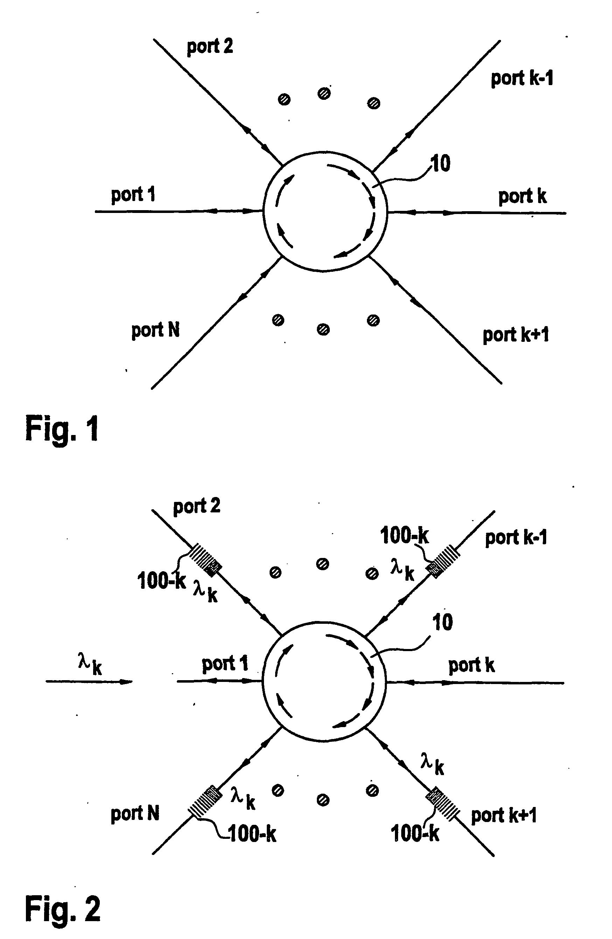

Fig. 1 depicts a generic representation of a circulator 10 with N ports. A signal entering at port i (with i = 1,2,..., N) will appear as an output signal at the next port i+1. That means that a signal entering port 1 appears at port 2 as an output signal. But, a signal that is fed into port 2 does not arrive at port 1 vice versa. It outputs at port 3 as the next port in clockwise direction. Circulators with 3 or 4 ports are very common today.

Circulators are not ideal components. In particular they exhibit an insertion loss IL_{i,i+1} between ports i and i+1 and have a finite isolation between the input port and all other ports.

To date fiber optic network equipped with circulators (e.g. in Add-Drop-Multiplexers) cannot be fully tested with an OTDR. A return path for the backscatter signal needed by an OTDR exists only to the point where the probing signal reaches the circulator. Any other fiber connected to the circulator on other ports cannot be tested. In order to do this one has to connect the OTDR at the input of the other fiber(s), which generally means time consuming travel to other locations.

In the article of Yoshiaki Sato et al: "Optical Time Domain Reflectometry in Optical Transmission Lines Containing In-line Er-doped Fiber Amplifiers", Journal of Lightwave Technology, IEEE New York, US, vol.10, No.1, 1992, pages 78-83, ISSN: 0733-8724, Optical Time Domain Reflectometry in an optical transmission line containing in-line Er-doped fiber amplifiers are investigated. The Er-doped fiber amplifiers are based on optical circulators.

### SUMMARY OF THE INVENTION

It is an object of the invention to provide a solution allowing to test an optical network equipped with circulators. The object is solved by the independent claims. Preferred embodiments are shown by the dependent claims.

Dependent on the type and arrangement of the non-reciprocal optical device, the invention provides a forward path and/or a return path for allowing reflectometer measurements in optical systems with non-reciprocal optical components. Thus, optical stimulus signals for the reflectometer measurements can be directed to the desired optical path to be measured, and/or reflected or backscattered signals in response to the optical stimulus signals can be directed in the reverse direction back towards the source of the optical stimulus signals or a respective measuring device.

In case e.g. of an optical circulator as non-reciprocal optical component, the optical stimulus signals can be directed via the forward path to any desired optical path attached to a specific output port of the circulator. This, of course, is only required as far as the specific output port is not the successive port to the input port for the optical stimulus signals, because then the optical stimulus signals will be directed anyway to that specific output port without the need of further guiding tools.

Alternatively or in addition to the provision of the forward path, the reflected or backscattered signals in response to the optical stimulus signals can be directed from any receiving port of the circulator back to the input port via the return path wherein the optical stimulus signals have been coupled in. This, of course, is only required when the input port is not the successive port to the receiving port, because then the reflected or backscattered signals will be directed anyway to the input port without the need of further guiding tools. The receiving port will in most cases be the specific (output) port to which the optical stimulus signals have been coupled out. In case that the measuring device for measuring the reflected or backscattered signals is different from the source of the optical stimulus signals and coupled to another port, the reflected or backscattered signals can also be directed to that other port accordingly.

The invention thus allows testing with an OTDR any fiber path connected to an N-port circulator from one single port.

In a preferred embodiment, one or more defined reflecting elements (such as fiber bragg gratings - FBG) are used which reflect optical signals at one or more given wavelengths and redirect them in reverse direction. FBGs are available with a wide variety of center wavelengths, which can also be aligned to the ITU (International Telecommunication Union) grid. Preferably, the test signal wavelength is tuned to the exact center wavelength of such a reflective device. The OTDR may preferably provide means to adjust the test signal wavelength. Thus, optical test signals at a distinctive wavelength can be directed and redirected as required for the testing.

The combination of the optical circulator with e.g. fiber bragg gratings thus allows to overcome the non-reciprocal character of the circulator to provide a return path for the test signal to the input port The combination of a multitude of fiber bragg gratings with distinctive center wavelengths and the circulator further allows to provide a wavelength-selectable return path via any output port of the circulator back to the input port.

By adequately selecting and designing the reflective elements coupled to the respective ports, not only reciprocal fiber systems but also additional non-reciprocal optical devices coupled to an output port of the (first) non-reciprocal optical device can be tested.

By selecting appropriate testing wavelengths/channels, disturbing effects on other traffic channels (e.g. for actual communication purposes) can be reduced or avoided. The test signal wavelengths can e.g. be separated from the traffic channels by occupying idle traffic channels, or by choosing test wavelength above or below the traffic band, or any combination of this.

In case e.g. of an optical isolator as a non-reciprocal optical component, a wavelength selective return path can be realized by the combination of a pair of optical couplers and an optical passband filter.

The reflecting elements can be already built in into the optical system to be measured and fixed coupled to the non-reciprocal optical component, so that the measurements can be directly executed without requiring to insert the reflecting elements. This allows in-situ measurements without having to modify the optical system only for the measurement Alternatively or in addition thereto, the reflecting elements can first be coupled to the non-reciprocal optical component before the measuring will be directly executed and might be removed afterwards. Thus, disturbances due to the reflecting elements can be reduced or avoided. With an appropriately designed system, however, the impairment on the traffic signals can be neglectable.

It is clear that the invention can be supported by one or more suitable software programs, which can be stored on or otherwise provided by any kind of data carrier, and which might be executed in or by any suitable data processing unit. This specifically applies for the controlling of the optical stimulus signals and the analysis of the reflected or backscattered signals alone or in combination with in response to the optical stimulus signals.

### BRIEF DESCRIPTION OF THE DRAWINGS

Other objects and many of the attendant advantages of the present invention will be readily appreciated and become better understandable by reference to the following detailed description when considering in connection with the accompanied drawings. Features that are substantially or functionally equal or similar will be referred to with the same reference sign(s).
- Fig. 1: depicts a generic representation of a circulator 10 as known in the art,
- Fig. 2: illustrates the principles according to the present invention for the circulator 10 as introduced by Fig. 1,
- Fig. 3: depicts an expanded inventive scheme for the example of the circulator 10 with four ports, and
- Fig. 4: depicts an Add-Drop Multiplexer 400 in accordance with the invention.

### DETAILED DESCRIPTION OF THE INVENTION

Fig. 2 illustrates the principles according to the present invention for the example of the circulator 10 as introduced by Fig. 1. The circulator 10 is provided with reflecting elements 100 in a way that each port k (with k = 2, ..., N) and thereto attached optical fiber(s) is testable from the input of the port 1. For that purpose, gratings 100-k with center wavelength λₖ are attached to all ports of the circulator 10 except of port 1 and port k. Without restriction in generality, port 1 shall be taken here as the input port. However, it will become clear from the following that this convention as applied here serves only for the purpose of better understanding.

An OTDR (not shown in the Figures) for measuring the circulator 10 and the attached fibers, is assumed to operate at wavelength λₖ. For the sake of simplicity, fibers coupled to the ports are not included in the drawing. The OTDR launches a probing pulse with the wavelength λₖ to port 1. As explained for Fig. 1, the circulator 10 forwards the probing pulse to port 2. There, the probing pulse is reflected at the attached grating 100-k with the center wavelength λₖ and redirected from the port 2 to port 3. From the port 3 to port k-1, the probing pulse experiences exactly the same situation, i.e. it is reflected at the respective attached grating 100-k with the center wavelength λₖ and redirected to the next port The probing pulse thus ripples through the circulator 10 to port k.

When the probing pulse hits the port k, it continues to travel along the fiber(s) coupled to the port k because there is no reflecting element 100-k like on all other ports. As a result, a generated backscatter signal (also with wavelength λₖ) from the fiber(s) coupled to the port k eventually returns to the port k, is directed in a way of an input signal at port k to port k+1, and successively guided (by means of the reflecting elements 100-k at the ports k+1 to N) to the input port 1. Since there is also no reflecting element coupled to the port 1, the OTDR coupled to the port 1 will receive the generated backscatter signal (fiber response) from the fiber(s) coupled to the port k. The backscatter signal, however, is attenuated by the sum of insertion losses I_{i,i+1}, i=1,...,N, (if i=N+1 then i=1 for the insertion loss between the last port N and the first port 1).

As the port k can be any port (besides the input port 1 in the convention of Fig. 2), the arrangement in Fig. 2 shows the general scheme how to provide a forward path from port 1 to port k and a return path from port k to port 1 through the circulator 10 for a test signal with wavelength λₖ.

The above illustrated testing scheme for the fiber(s) coupled to one port k can also be applied accordingly for concurrently testing more than one port. By concatenating two or more reflecting elements 100 (e.g. fiber bragg gratings), the scheme shown in Fig. 2 can be expanded to make every fiber testable from one single input port. In case fiber j at port, j≠k, is to be tested at wavelength λᵢ, reflecting elements 100-j with a center wavelength λⱼ are connected additionally to every port but input port 1 and port j. For testing the fiber at port i≠j≠k at a wavelength λᵢ, additional reflecting elements 100-l with a center wavelength λₗ have to be connected to every port but input port 1 and port l. This can be continued until all ports are equipped with N-2 reflecting elements 100.

By providing different center wavelengths λᵢ (with i=2...N) for all the reflecting elements 100-i, 100-j, 100-k and so on, the probing pulse with one wavelength will generate only one backscatter signal from one fiber at a time. Thus, each fiber can be tested individually.

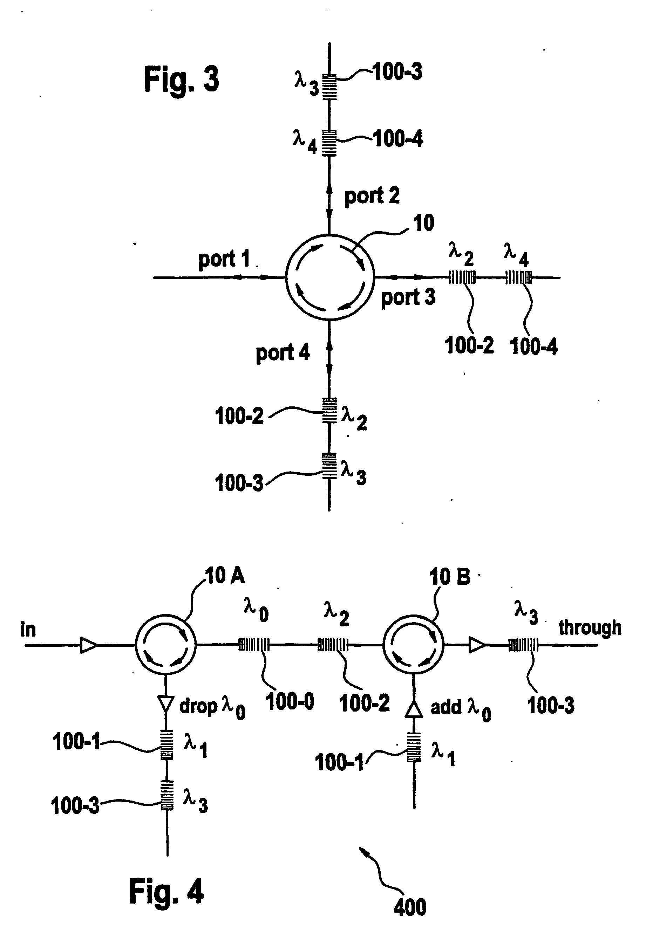

Fig. 3 depicts an expanded scheme for the example of the circulator 10 with four ports. In order to test port 2 with wavelength λ₂, ports 3 and 4 are each provided with a respective reflecting element 100-2 having a center wavelength λ₂. For testing port 3 with wavelength λ₃, ports 2 and 4 are each provided with a respective reflecting element 100-3 having a center wavelength λ₃. Accordingly, for testing port 4 with wavelength λ₄, ports 2 and 3 are each provided with a respective reflecting element 100-4 having a center wavelength λ₄.

A general rule can be derived easily. To be able to test all N fibers that are attached to an N-port circulator (including the lead-in fiber) an OTDR with N-1 different test wavelengths is needed. Every port k (with k=2 ... N) has (N-2) reflecting elements 100 with different wavelengths λᵢ (with i≠k, i=2,...,N) attached thereto. Thus in total (N-2) * (N-1) reflecting elements 100 are needed for fully testing all fibers attached to the N ports.

If an optical path contains multiple circulators, the same rule applies in this case. However, it should be made sure that always a wavelength is selected appropriately in order to have a unique assignment of fibers and wavelengths.

It is clear that in general any N-port circulator can be built up by connecting in series N-2 circulators each with 3-ports. In that case, the first port of the first 3-port circulator serves as input port, the second port of the first circulator is connected with the first port of the second circulator, and the second port of the circulator k (with k = 1, ..., N-3) is connected with the first port of the circulator k+1. The principles of the invention can be applied accordingly.

The technique described so far makes only one wavelength available for any output port. If a subsequent circulator and its attached fiber(s) need to be tested too, several wavelengths have to be directed to this component via an output k of the first circulator. This can be accomplished e.g. by replacing any reflecting element 100 with center wavelength λₖ by a set of concatenated reflecting elements 100 with different wavelengths.

Fig. 4 depicts an Add-Drop Multiplexer 400 as example for testing plural devices that are serially connected. Main functions of the Add-Drop Multiplexer 400 are: dropping to an output DROP λ₀ all signals received at an input IN with a center wavelength λ₀; outputting signals received at an input ADD λ₀ with a center wavelength λ₀ to an output THROUGH; and feeding all other signals with center wavelengths λᵢ as received from the input IN to the output THROUGH. The Add-Drop multiplexer 400 is composed of two circulators 10A and 10B and a fiber bragg grating 100-0 with a center wavelength λ₀

Typically, the incoming signal at the input IN is composed of a multitude of individual wavelengths λᵢ The signal with wavelength λ₀ from the input IN is reflected by the fiber bragg grating 100-0 with center wavelength λ₀, appears at the drop port DROP λ₀, and is thus not conveyed to the port THROUGH. If a traffic signal with wavelength λ₀ is fed into the port ADD λ₀, it shows up at the port THROUGH only, neither at the input IN nor at the port DROP λ₀.

For testing fibers coupled to the Add-Drop multiplexer 400, the Add-Drop multiplexer 400 further comprises additional fiber gratings 100. For testing fibers coupled to the output THROUGH, fiber gratings 100-1 with center wavelength λ₁ are coupled to the ports ADD λ₀ and DROP λ₀. Thus, a probing pulse with wavelength λ₁ applied from the OTDR to the input port IN will travel through both circulators 10A and 10B to the fibers coupled to the port THROUGH. Backscattered signals from the fibers coupled to the port THROUGH will return to the port THROUGH, be reflected by both fiber gratings 100-1 with center wavelength λ₁, and return to the input port IN to be measured by the OTDR coupled thereto. For testing fibers coupled to the port DROP λ₀, a fiber grating 100-2 with center wavelength λ₂ is coupled between the two arcutators 10A and 10B. Thus, a probing pulse with wavelength λ₂ applied from the OTDR to the port IN will be reflected by the fiber gratings with center wavelength λ₂, backscattered by the fibers coupled to the port DROP λ₀, and return to the port IN to be measured by the OTDR coupled thereto. Accordingly for testing fibers coupled to the port ADD λ₀, fiber gratings 100-3 with center wavelength λ₃ are coupled to the ports THROUGH and DROP λ₀. A probing pulse with wavelength λ₃ applied from the OTDR to the port IN will travel through both circulators 10A and 10B to the fibers coupled to the port ADD. The backscattered signal from the fibers coupled to the port ADD λ₀ will return to the port ADD λ₀, travel back through both circulators, be reflected by the fiber grating 100-1 with center wavelength λ₁ at the port DROP λ₀, and thus return to the port IN to be measured by the OTDR coupled thereto.

Thus, any test signal besides λ₀, λ₂, and λ₃ appears at the port THROUGH and generates a backscatter signal on thereto-attached fiber(s). But only the backscatter signal with wavelength λ₁ finds its way back to the input port IN. This way the fiber (and any subsequent network devices) can be tested with λ₁. Accordingly, the drop path coupled to the port DROP λ₀ and the attached fibers can be tested at wavelength λ₂ or λ₀, and the add path coupled to the port ADD λ₀ with its fiber(s) can be tested at wavelength λ₃.

It is clear that the OTDR applied for testing the Add-Drop multiplexer 400 should have tunable wavelength capabilibes or appropriate fixed wavelength sources built-in. Thus, all ports of the Add-Drop multiplexer 400 can be tested with a tunable-λ OTDR.

The test wavelength for the fiber(s) at the port DROP λ₀ can either be wavelength λ₀ or λ₂. If it is accepted that the test wavelength is equal to the traffic wavelength, the grating 100-2 with λ₂ can be omitted. This would be advantageous if the internal structure of the Add-Drop multiplexer 400 is not accessible. In that case all the additional gratings need to be attached to the outside ports only.

The test wavelengths λ₁, λ₂, and λ₃ are preferably chosen in order not to occupy and interfere with any traffic channel and to allow that the fibers can be tested even on a running system. Depending on system properties it can be advantageous to select the test wavelength(s) to be above or below the traffic wavelength range.

## Claims

1. An optical system for a reflectometer measurement of an optical path to be measured, comprising:
a non-reciprocal optical device (10) having a plurality of ports each for providing an input and/or an output of the device, wherein when an input signal is received at a first one of the ports, and a reflected or backscattered signal from the optical path to be measured in response to the input signal will be received at a second one of the ports by the device,
wherein the optical system further comprises:
a return path from the second one to the first one of the ports of the non-reciprocal optical device (10), and
a forward path from the first one to the second one of the ports of the non-reciprocal optical device (10),
**characterized in that**
the return path has one or more first reflecting elements (100-k) for reflecting optical signals at the given center wavelength (λₖ), the one or more first reflecting elements (100-k) being arranged for directing a portion of the input signal having the given center wavelength (λₖ) from the second one to the first one of the ports, and/or
the forward path has one or more second reflecting elements (100-k) for reflecting optical signals at the given center wavelength (λₖ), the one or more second reflecting elements (100-k) being arranged for directing a portion of the input signal having the given center wavelength (λₖ) path from the first one to the second one of the ports.

2. The optical system of claim 1, wherein:
the non-reciprocal optical device (10) comprises an optical circulator (10)
having a plurality of ports arranged in a circular manner, each port for providing an input and/or an output of the circulator (10), wherein a signal input at one port will be output by the thereto consecutive port, and
in case that the portion of the input signal at a first port having the given center wavelength (λₖ) is to be output at a second port, each port between the first and the second port comprises one of the second reflecting elements (100-k) with the given center wavelength (λₖ) for directing the portion of the input signal having the given center wavelength (λₖ) from the first and the second port, and
in case that the portion of the reflected or backscattered signal received at the second port and having the given center wavelength (λₖ) is to be output at a third port, each port between the second port and the third port comprises one of the first reflecting elements (100-k) with the given center wavelength (λₖ) for directing the portion of the reflected or backscattered signal having the given center wavelength (λₖ) from the second port and the third port, whereby the third port can also be the first port.

3. The optical system of claim 1, wherein:
the non-reciprocal optical device (10) comprises an optical circulator (10) having a plurality N of ports arranged in a circular manner, each port for providing an input and/or an output of the circulator (10), wherein a signal input at a port n, with n=1 to n=N, will be output by a consecutive port m, with m=n+1 or m=1 for n=N, of the ports, and a signal input at the port m will be output by a consecutive port m+1 of the ports, whereby the port m+1 is different from the port n, and
in case that the portion of the input signal at a port n=1 having the given center wavelength (λₖ) is to be output at a port n=k, with k=2 to k=N, each port from a port n=2 to a port n=k-1 comprises one of the second reflecting elements (100-k) with the given center wavelength (λₖ) for directing the portion of the input signal having the given center wavelength (λₖ) from the port n=1 to the port n=k, and
in case that the portion of the reflected or backscattered signal received at the port n=k and having the given center wavelength (λₖ) is to be output at a port l, with l=k+2 to l=k-1, each port from a port n=k+1 to a port I-1 comprises l one of the first reflecting elements (100-k) with the given center wavelength (λₖ) for directing the portion of the reflected or backscattered signal having the given center wavelength (λₖ) from the port n=k to the port n=l.

4. The optical system of claim 3, wherein the center wavelength (λₖ) of the respective reflecting element(s) (100-k) is different for each different value of k.

5. The optical system of claim 3 or 4, wherein one of the reflecting elements (100-k) coupled to one of the ports comprises a plurality of different center wavelengths (λᵢ) for measuring a second non-reciprocal optical device (10B) coupled to the one of the ports.

6. The optical system of claim 5, wherein the one of the reflecting elements (100-k) with the plurality of different center wavelengths (λᵢ) comprises a plurality of individual reflecting elements each with one the plurality of different center wavelengths (λᵢ).

7. A measuring setup for providing a reflectance or backscattering measurement wherein an input signal with a first center wavelength (λₖ) is applied and a reflected or backscattered signal in response to the input signal is be measured, the measuring setup comprising:
the optical system of claim 2,
an optical source, coupled to the first port of the non-reciprocal optical device (10), for providing the input signal,
an optical network coupled to the second port of the non-reciprocal optical device (10), and
an optical measuring device, coupled to the third port of the non-reciprocal optical device (10), for measuring the reflected or backscattered signal in response to the input signal, whereas the third port can also be the first port.

8. The measuring setup of claim 7, wherein an optical time domain reflectometer (OTDR) comprises the optical source and the optical measuring device.

9. A method for providing a reflectance or backscattering measurement of an optical circulator device (10) and an optical network coupled thereto, the optical circulator device (10) having a plurality of ports arranged in a circular manner, each port for providing an input and/or an output of the device, wherein a signal input at a port n of the ports will be output by a consecutive port n+1 of the ports, and a signal input at the port n+1 will be output by a consecutive port n+2 of the ports, whereby the port n+2 is different from the port n, the method comprising the steps of:
• inputting a test signal at a first center wavelength to a first one of the ports,
• receiving, by the second one of the ports, a reflected or backscattered signal as response to the test signal applied to the first one of the ports,
• measuring the reflected or backscattered signal as response to the test signal at the first one of the ports,
**characterized by**
• blocking for the first center wavelength all ports consecutive to the first one of the ports and before a second one of the ports by coupling said ports with second reflecting elements (100-k) with the given center wavelength (λₖ), so that the test signal at the first center wavelength is substantially transmitted from the first one of the ports to the second one of the ports, and
• blocking for the first center wavelength all ports consecutive to the second one of the ports and before the first one of the ports by coupling said ports with first reflecting elements (100-k) with the given center wavelength λₖ), so that the reflected or backscattered signal as response to the test signal is substantially transmitted from the second one of the ports to the first one of the ports.

## Patentansprüche

1. Optisches System für eine Reflektometermessung eines zu messenden Lichtweges, welches Folgendes umfasst:
eine nichtreziproke optische Einheit (10) mit einer Vielzahl von Anschlüssen, die jeweils als Eingang und/oder Ausgang der Einheit dienen, bei welcher an einem ersten Anschluss ein Eingangssignal empfangen und als Reaktion auf das Eingangssignal an einem zweiten Anschluss der Einheit ein vom zu messenden optischen Pfad reflektiertes oder rückgestreutes Signal empfangen wird,
wobei das optische System ferner Folgendes umfasst:
einen Rückwärtsweg vom zweiten zum ersten Anschluss der nichtreziproken optischen Einheit (10), und
einen Vorwärtsweg vom ersten zum zweiten Anschluss der nichtreziproken optischen Einheit (10),
**dadurch gekennzeichnet, dass**
der Rückwärtsweg ein oder mehrere erste reflektierende Elemente (100-k) zum Reflektieren von Lichtsignalen bei der bestimmten Mittenwellenlänge (λₖ) aufweist, wobei das eine oder die mehreren ersten reflektierenden Elemente (100-k) so angeordnet sind, dass sie einen Teil des Eingangssignals mit der bestimmten Mittenellenlänge (λ_{K}) vom zweiten zum ersten Anschluss leiten, und/oder
der Vorwärtsweg ein oder mehrere zweite reflektierende Elemente (100-k) zum Reflektieren von Lichtsignalen bei der bestimmten Mittenwellenlänge (λₖ) aufweist, wobei das eine oder die mehreren zweiten reflektierenden Elemente (100-k) so angeordnet sind, dass sie einen Teil des Eingangssignals mit der bestimmten Mittenwellenlänge (λₖ) vom ersten zum zweiten Anschluss leiten.

2. Optisches System nach Anspruch 1, bei welchem:
die nichtreziproke optische Einheit (10) einen optischen Zirkulator (10) mit einer Vielzahl von kreisförmig angeordneten Anschlüssen umfasst, die jeweils einen Eingang und/oder einen Ausgang des Zirkulators (10) darstellen, wobei ein Eingangssignal an einem Anschluss durch einen darauf folgenden Anschluss ausgegeben wird, und
wenn der Teil des Eingangssignals an einem ersten Anschluss mit der bestimmten Mittenwellenlänge (λₖ) an einem zweiten Anschluss ausgegeben werden soll, jeder Anschluss zwischen dem ersten und dem zweiten Anschluss eines der zweiten reflektierenden Elemente (100-k) mit der bestimmten Mittenwellenlänge (λₖ) zum Leiten des Teils des Eingangssignals mit der bestimmten Mittenwellenlänge (λₖ) vom ersten und zweiten Anschluss umfasst, und
wenn der Teil des am zweiten Anschluss empfangenen reflektierten oder rückgestreuten Signals mit der bestimmten Mittenwellenlänge (λₖ) an einem dritten Anschluss ausgegeben werden soll, jeder Anschluss zwischen dem zweiten und dem dritten Anschluss eines der ersten reflektierenden Elemente (100-k) mit der bestimmten Mittenwellenlänge (λₖ) zum Leiten des Teils des reflektierten oder rückgestreuten Signals mit der bestimmten Mittenwellenlänge (λₖ) vom zweiten und dritten Anschluss umfasst, wobei der dritte Anschluss auch gleichzeitig der erste Anschluss sein kann.

3. Optisches System nach Anspruch 1, bei welchem:
die nichtreziproke optische Einheit (10) einen optischen Zirkulator (10) mit einer Vielzahl N von kreisförmig angeordneten Anschlüssen umfasst, wobei jeder Anschluss einen Eingang und/oder einen Ausgang des Zirkulators (10) darstellt, wobei ein Eingangssignal an einem Anschluss n, mit n=1 bis n=N, durch einen nachfolgenden Anschluss m, mit m=n+1 oder m=1 für n=N, ausgegeben wird und ein Eingangssignal am Anschluss m durch einen nachfolgenden Anschluss m+1 ausgegeben wird, wobei der Anschluss m+1 vom Anschluss n verschieden ist, und
wenn der Teil des Eingangssignals an einem Anschluss n=1 mit der bestimmten Mittenwellenlänge (λₖ) an einem Anschluss n=k, mit k=2 bis k=N, ausgegeben werden soll, jeder Anschluss von einem Anschluss n=2 bis zu einem Anschluss n=k-1 eines der zweiten reflektierenden Elemente (100-k) mit der bestimmten Mittenwellenlänge (λₖ) zum Leiten des Teils des Eingangssignals mit der bestimmten Mittenwellenlänge (λₖ) vom Anschluss n=1 zum Anschluss n=k umfasst, und
wenn der Teil des am Anschluss n=k empfangenen Teils des reflektierten oder rückgestreuten Signals mit der bestimmten Mittenwellenlänge (λₖ) an einem Ausgang 1, mit l=k+2 bis l=k-1, ausgegeben werden soll, jeder Anschluss von einem Anschluss n=k+1 bis zu einem Anschluss l-1 eines der ersten reflektierenden Elemente (100-k) mit der bestimmten Mittenwellenlänge (λₖ) zum Leiten des Teils des reflektierten oder rückgestreuten Signals mit der bestimmten Mittenwellenlänge (λₖ) vom Anschluss n=k zum Anschluss n= l umfasst.

4. Optisches System nach Anspruch 3, bei welchem die Mittenwellenlänge (λₖ) des/der entsprechenden reflektierenden Element(e) (100-k) für jeden unterschiedlichen Wert von k verschieden ist.

5. Optisches System nach Anspruch 3 oder 4, bei welchem eines der mit einem der Anschlüsse verbundenen reflektierenden Elemente (100-k) eine Vielzahl verschiedener Mittenwellenlängen (λₗ) zum Messen einer zweiten nichtreziproken optischen Einheit (10B) umfasst, die mit einem der Anschlüsse verbunden ist.

6. Optisches System nach Anspruch 5, bei welchem das eine reflektierende Element (100-k) mit der Vielzahl verschiedener Mittenwellenlängen (λₗ) eine Vielzahl einzelner reflektierender Elemente umfasst, die jeweils eine aus der Vielzahl der verschiedenen Mittenwellenlängen (λₗ) aufweisen.

7. Messanordnung zum Durchführen einer Reflexions- oder Rückstreuungsmessung, bei welcher ein Eingangssignal mit einer ersten Mittenwellenlänge (λₖ) eingegeben und als Reaktion auf das Eingangssignal ein reflektiertes oder rückgestreutes Signal gemessen wird, wobei die Messanordnung Folgendes umfasst:
das optische System nach Anspruch 2,
eine mit dem ersten Anschluss der nichtreziproken optischen Einheit (10) verbundene Lichtquelle zum Erzeugen des Eingangssignals,
ein mit dem zweiten Anschluss der nichtreziproken optischen Einheit (10) verbundenes optisches Netz, und
eine mit dem dritten Anschluss der nichtreziproken optischen Einheit (10) verbundene optische Messeinheit zum Messen des reflektierten oder rückgestreuten Signals als Reaktion auf das Eingangssignal, wobei der dritte Anschluss gleichzeitig auch der erste Anschluss sein kann.

8. Messanordnung nach Anspruch 7, bei welcher ein optisches Zeitdomänen-Reflektometer (Optical Time Domain Reflectometer, OTDR) die Lichtquelle und die optische Messeinheit umfasst.

9. Verfahren zum Durchführen einer Reflexions- oder Rückstreuungsmessung eines optischen Zirkulators (10) und eines mit dieser verbundenen optischen Netzes, wobei der optische Zirkulator (10) eine Vielzahl kreisförmig angeordneter Anschlüsse aufweist, die jeweils einen Eingang und/oder Ausgang der Einheit darstellen, wobei bei dem Verfahren ein Eingangssignal an einem Anschluss n durch einen nachfolgenden Anschluss n+1 ausgegeben wird und ein Eingangssignal am Anschluss n+1 durch einen nachfolgenden Anschluss n+2 ausgegeben wird, wobei der Anschluss n+2 vom Anschluss n verschieden ist und das Verfahren die folgenden Schritte umfasst:
• Eingeben eines Prüfsignals bei einer ersten Mittenwellenlänge in einen ersten Anschluss,
• Empfangen eines reflektierten oder rückgestreuten Signals vom zweiten Anschluss als Reaktion auf das in den ersten Anschluss eingegebene Prüfsignal,
• Messen des reflektierten oder rückgesteuerten Signals am ersten Anschluss als Reaktion auf das Prüfsignal,
**gekennzeichnet durch**
• Sperren der ersten Mittenwellenlänge an allen Anschlüssen nach dem ersten Anschluss und vor einem zweiten Anschluss **durch** Koppeln der Anschlüsse mit zweiten reflektierenden Elementen (100-k) mit der bestimmten Mittenwellenlänge (λₖ), sodass das Prüfsignal bei der ersten Mittenwellenlänge im Wesentlichen vom ersten Anschluss zum zweiten Anschluss übertragen wird, und
• Sperren der ersten Mittenwellenlänge an allen Anschlüssen nach dem zweiten Anschluss und vor dem ersten Anschluss **durch** Koppeln der Anschlüsse mit ersten reflektierenden Elementen (1 00-k) mit der bestimmten Mittenwellenlänge (λₖ), sodass das reflektierte oder rückgestreute Signal als Reaktion auf das Prüfsignal im Wesentlichen vom zweiten Anschluss zum ersten Anschluss übertragen wird.

## Revendications

1. Système optique destiné à une mesure par réflecteur d'un chemin optique devant être mesuré, comprenant :
un dispositif optique non réciproque (10) possédant une pluralité de ports chacun destiné à fournir une entrée et/ou une sortie du dispositif, dans lequel lorsqu'un signal d'entrée est reçu au niveau d'un premier des ports, et un signal réfléchi ou rétrodiffusé depuis le chemin optique peut être mesuré en réponse au signal d'entrée sera reçu au niveau d'un deuxième des ports par le dispositif,
dans lequel le système optique comprend en outre :
un chemin retour du deuxième au premier des ports du dispositif optique non réciproque (10), et
un chemin aller du premier au deuxième des ports du dispositif optique non réciproque (10),
**caractérisé en ce que**
le chemin retour possède un ou plusieurs premiers éléments réflecteurs (100-k) destinés à réfléchir des signaux optiques à la longueur d'onde centrale donnée (λₖ), l'un ou plusieurs premiers éléments réflecteurs (100-k) étant disposés de sorte à diriger une partie du signal d'entrée présentant la longueur d'onde centrale donnée (λₖ) du deuxième au premier des ports, et/ou
le chemin aller possède un ou plusieurs deuxièmes éléments réflecteurs (100-k) destinés à réfléchir des signaux optiques à la longueur d'onde centrale donnée (λₖ), l'un ou plusieurs deuxièmes éléments réflecteurs (100-k) étant disposés de sorte à diriger une partie du signal d'entrée présentant la longueur d'onde centrale donnée (λₖ) du premier au deuxième des ports.

2. Système optique conforme à la revendication 1, dans lequel :
le dispositif optique non réciproque (10) comprend un circulateur optique (10) possédant une pluralité de ports disposés de manière circulaire, chaque port destiné à fournir une entrée et/ou une sortie du circulateur (10), dans lequel un signal entré au niveau d'un port sera sorti par le port consécutif à celui-ci, et
dans le cas où la partie du signal d'entrée au niveau d'un premier port présentant la longueur d'onde centrale donnée (λₖ) doit être sortie au niveau d'un deuxième port, chaque port entre le premier et le deuxième port comprend l'un des deuxièmes éléments réflecteurs (100-k) avec la longueur d'onde centrale donnée (λₖ) de sorte à diriger la partie du signal d'entrée présentant la longueur d'onde centrale donnée (λₖ) du premier et du deuxième port, et
dans le cas où la partie du signal réfléchi ou rétrodiffusé reçu au niveau du deuxième port et présentant la longueur d'onde centrale donnée (λₖ) doit être sortie au niveau d'un troisième port, chaque port entre le deuxième et le troisième port comprend l'un des premiers éléments réflecteurs (100-k) avec la longueur d'onde centrale donnée (λₖ) de sorte à diriger la partie du signal réfléchi ou rétrodiffusé présentant la longueur d'onde centrale donnée (λₖ) du deuxième port et du troisième port, moyennant quoi le troisième port peut également être le premier port.

3. Système optique conforme à la revendication 1, dans lequel :
le dispositif optique non réciproque (10) comprend un circulateur optique (10) possédant une pluralité N de ports disposés de manière circulaire, chaque port destiné à fournir une entrée et/ou une sortie du circulateur (10), dans lequel un signal entré au niveau d'un port n, avec n=1 à n=N, sera émis par un port consécutif m, avec m=n+1 ou m=1 pour n=N, des ports, et un signal entré au niveau du port m sera émis par un port consécutif m+1 des ports, moyennant quoi le port m+1 est différent du port n, et
dans le cas où la partie du signal d'entrée au niveau d'un port n=1 présentant la longueur d'onde centrale donnée (λₖ) doit être émise au niveau d'un port n=k, avec k=2 à k=N, chaque port compris entre un port n=2 et un port n=k-1 comprend l'un des deuxièmes éléments réflecteurs (100-k) avec la longueur d'onde centrale donnée (λₖ) de sorte à diriger la partie du signal d'entrée présentant la longueur d'onde centrale donnée (λₖ) du port n=1 au port n=k, et
dans le cas où la partie du signal réfléchi ou rétrodiffusé reçu au niveau du port n=k et présentant la longueur d'onde centrale donnée (λₖ) doit être émise au niveau d'un port l, avec l=k+2 à l=k-1, chaque port compris entre un port n=k+1 et un port I-1 comprend l'un des premiers éléments réflecteurs (100-k) avec la longueur d'onde centrale donnée (λₖ) de sorte à diriger la partie du signal réfléchi ou rétrodiffusé présentant la longueur d'onde centrale donnée (λₖ) du port n=k au port n=1.

4. Système optique conforme à la revendication 3, dans lequel la longueur d'onde centrale (λₖ) du ou des éléments réflecteurs respectifs (100-k) est différente pour chaque valeur différente de k.

5. Système optique conforme à la revendication 3 ou 4, dans lequel l'un des éléments réflecteurs (100-k) couplé à l'un des ports comprend une pluralité de longueurs d'onde centrales différentes (λₗ) de sorte à mesurer un deuxième dispositif optique non réciproque (10B) couplé à l'un des ports.

6. Système optique conforme à la revendication 5, dans lequel l'un des éléments réflecteurs (100-k) avec la pluralité de longueurs d'onde centrales différentes (λₗ) comprend une pluralité d'éléments réflecteurs individuels chacun avec l'une de la pluralité de longueurs d'onde centrales différentes (λₗ).

7. Dispositif de mesure destiné à fournir une mesure de réflexion ou rétrodiffusion dans lequel un signal d'entrée avec une première longueur d'onde centrale (λₖ) est appliqué et un signal réfléchi ou rétrodiffusé en réponse au signal d'entrée doit être mesuré, le dispositif de mesure comprenant :
le système optique conforme à la revendication 2,
une source optique, couplée au premier port du dispositif optique non réciproque (10), destinée à fournir le signal d'entrée,
un réseau optique couplé au deuxième port du dispositif optique non réciproque (10), et
un dispositif de mesure optique, couplé au troisième port du dispositif optique non réciproque (10), destiné à mesurer le signal réfléchi ou rétrodiffusé en réponse au signal d'entrée, tandis que le troisième port peut également être le premier port.

8. Dispositif de mesure conforme à la revendication 7, dans lequel un réflectomètre optique dans le domaine temporel (OTDR) comprend la source optique et le dispositif de mesure optique.

9. Procédé de fourniture d'une mesure de réflexion ou rétrodiffusion d'un dispositif de circulateur optique (10) et d'un réseau optique couplé à celui-ci, le dispositif de circulateur optique (10) possédant une pluralité de ports agencés de manière circulaire, chaque port destiné à fournir une entrée et/ou une sortie du dispositif, dans lequel un signal entré au niveau d'un port n des ports sera émis par un port consécutif n+1 des ports, et un signal entré au niveau du port n+1 sera émis par un port consécutif n+2 des ports, le port n+2 étant différent du port n, le procédé comprenant les étapes consistant à :
• entrer un signal de test à une première longueur d'onde centrale dans un premier des ports,
• recevoir, par le deuxième des ports, un signal réfléchi ou rétrodiffusé en réponse au signal de test appliqué au premier des ports,
• mesurer le signal réfléchi ou rétrodiffusé en réponse au signal de test au niveau du premier des ports,
**caractérisé par**
● le blocage pour la première longueur d'onde centrale de tous les ports consécutifs au premier des ports et avant un deuxième des ports en couplant lesdits ports aux deuxièmes éléments réflecteurs (100-k) avec la longueur d'onde centrale donnée (λₖ), de sorte que le signal de test à la première longueur d'onde centrale est sensiblement transmis du premier des ports au deuxième des ports, et
● le blocage pour la première longueur d'onde centrale de tous les ports consécutifs au deuxième des ports et avant le premier des ports en couplant lesdits ports aux premiers éléments réflecteurs (100-k) avec la longueur d'onde centrale donnée (λₖ), de sorte que le signal réfléchi ou rétrodiffusé en réponse au signal de test est sensiblement transmis du deuxième des ports au premier des ports
